# NEUE EUROPÄISCHE PATENTSCHRIFT

(11) **EP 2 649 631 B2**
(45) Veröffentlichungstag und Bekanntmachung des Hinweises auf die Entscheidung über den Einspruch: **24.01.2018**
(45) Hinweis auf die Patenterteilung: 27.08.2014
(21) Anmeldenummer: 11807649.6
(22) Anmeldetag: 07.12.2011
(51) Int. Cl.: H01H 9/32, H01H 37/76, H01C 7/12, H01H 33/06, H02H 9/00, H01R 13/516

(54) **THERMISCHE ABTRENNVORRICHTUNG**
THERMAL SEPARATING DEVICE
DISPOSITIF DE COUPURE THERMIQUE

(30) Priorität: 08.12.2010 DE 102010061110
(43) Veröffentlichungstag der Anmeldung: 16.10.2013
(73) Patentinhaber: Phoenix Contact GmbH & Co. KG, 32825 Blomberg (DE)
(72) Erfinder: STRIEWE, Martin, 32805 Horn-Bad Meinberg (DE); DEPPING, Christian, 32657 Lemgo (DE); BEHNKE, Sven, 33189 Schlangen (DE)
(74) Vertreter: Gesthuysen, Michael
(86) Internationale Anmeldenummer: PCT/EP2011/072114
(87) Internationale Veröffentlichungsnummer: WO 2012/076613

(56) Entgegenhaltungen:
- EP-A1- 0 299 401
- DD-A1- 239 488
- DE-A1- 3 541 747
- DE-A1- 3 723 538
- DE-A1- 19 735 521
- DE-B4-102007 004 920
- DE-C- 959 660
- DE-U1- 7 501 349
- DE-U1- 9 217 024
- DE-U1- 29 516 057
- US-B1- 6 430 019

## Beschreibung

Die Erfindung betrifft eine thermische Abtrennvorrichtung.

Aus dem Stand der Technik ist die US 6430019 bekannt. Bei der dort aufgefundenen Lösung wird ein schildartiger Körper in einen entstehenden Zwischenraum verfahren. Dennoch vermag die Lösung Lichtbogen nicht sicher zu unterdrücken, da konstruktionsbedingt große leitende Abschnitte vorhanden sind, die die Ausbildung von Lichtbogen im Schaltfall begünstigen.

Aus der US 6 430 019 B1 ist eine thermische Abtrennvorrichtung bekannt, bei der ein erster Kontakt an einer thermisch trennbaren Kontaktstelle mit einem zweiten Kontakt verbunden ist. Der erste Kontakt ist als Federzunge ausgeführt und in dieser mit dem zweiten Kontakt verbundenen Position mit einer Federkraft beaufschlagt. Beim Auftrennen der Kontaktstelle wird die Federzunge durch ihre Federkraft von dem zweiten Kontakt gelöst, und ein Isolierkörper wird zwischen die beiden Kontakte gebracht.

Weiterhin sind aus der EP 0 299 401 A1 und der DE 959 660 C jeweils Löschkammern bekannt, in die einzelne Kontakte zum Löschen eines Lichtbogens verbracht werden.

Der Erfindung liegt die Aufgabe zu Grunde, eine thermische Abtrennvorrichtung zur Verfügung zu stellen, die die bekannten Probleme in erfinderischer Weise löst.

Die Lösung der Aufgabe erfolgt erfindungsgemäß durch eine thermische Abtrennvorrichtung mit einem ersten Leiterabschnitt und einem zweiten Leiterabschnitt, wobei der erste Leiterabschnitt zumindest abschnittsweise in einem umgebenden Isolierkörper geführt ist, der erste Leiterabschnitt und zweite Leiterabschnitt an einer thermisch trennbaren Kontaktstelle miteinander verbunden sind, und der erste Leiterabschnitt mit einer Kraft beaufschlagt ist, so dass, wenn die Kontaktstelle getrennt ist, so dass der erste Leiterabschnitt in den umgebenden Isolierkörper verbracht wird.

Dabei weist der umgebenden Isolierkörper einen bewegbaren Abschnitt auf, wobei der bewegbare Abschnitt dergestalt ist, dass er, in einer ersten Position, wenn die Kontaktstelle nicht gelöst ist, den Leiterabschnitt abschnittsweise überdeckt, und in einer zweiten Position, wenn die Kontaktstelle gelöst ist, der Leiterabschnitt hinter den bewegbaren Abschnitt in den Isolierkörper verbracht ist, der bewegbare Abschnitt den vom Leiterabschnitt zuvor eingenommenen Raum füllt.

In noch einer weiteren Ausführungsform ist der bewegbare Abschnitt mit einer Kraft beaufschlagt, so dass der bewegbare Abschnitt, wenn der Leiterabschnitt in den Isolierkörper gezogen ist, von der Kraft aus der ersten Position in die zweite Position verbringbar ist.

Gemäß einer weiteren Ausfiihrungsform besteht der bewegbare Abschnitt zumindest abschnittsweise aus einem ausgasenden Material, um einen eventuell auftretenden Lichtbogen ausblasen zu können.

Gemäß noch einer weiteren Ausfiihrungsform weist der umgebenden Isolierkörper zumindest abschnittsweise ein ausgasendes Material auf, um einen eventuell auftretenden Lichtbogen ausblasen zu können.

In einer weiteren Ausführungsform weist die Kontaktstelle eine Lötstelle auf.

In noch einer weiteren Ausführungsform weist der erste Leiterabschnitt im Wesentlichen einen rechteckigen Durchmesser auf.

Gemäß noch einer weiteren Ausfuhrungsform ist der erste Leiterabschnitt mit einer Federkraft beaufschlagt, so dass, wenn die Kontaktstelle gelöst ist, der erste Leiterabschnitt in dem umgebenden Isolierkörper hineingezogen wird.

Gemäß einer weiteren Ausführungsform ist der der bewegbare Abschnitt mit einer Federkraft beaufschlagt, so dass der bewegbare Abschnitt, wenn der Leiterabschnitt in den Isolierkörper gezogen ist, von der Kraft aus der ersten Position in die zweite Position verbringbar ist.

Gemäß noch einer weiteren Ausführungsform ist der erste Leiterabschnitt im Betrieb am Neutralleiter oder an Masse oder am Schutzleiter angeschlossen.

Nachfolgend wird die Erfindung unter Bezugnahme auf die anliegende Zeichnung anhand bevorzugter Ausführungsformen näher erläutert.

Es zeigen
Fig. 1 eine schematisierte erfindungsgemäße thermische Abtrennvorrichtung im Betriebsfall,
Fig. 2 ein schematisiertes Detail einer erfindungsgemäßen thermischen Abtrennvorrichtung im Betriebsfall,
Fig. 3 eine andere Ausführungsform einer schematisierte erfindungsgemäße thermische Abtrennvorrichtung im Betriebsfall,
Fig. 4 ein schematisiertes Detail einer andere Ausführungsform einer erfindungsgemäßen thermischen Abtrennvorrichtung im Betriebsfall,
Fig. 5 eine schematisierte erfindungsgemäße thermische Abtrennvorrichtung im ausgelösten Zustand,
Fig. 6 einen Querschnitt eine schematisiertes Detail einer erfindungsgemäßen thermischen Abtrennvorrichtung im Betriebsfall, und
Fig. 7 einen Querschnitt eine schematisiertes Detail einer erfindungsgemäßen thermischen Abtrennvorrichtung im ausgelösten Zustand.

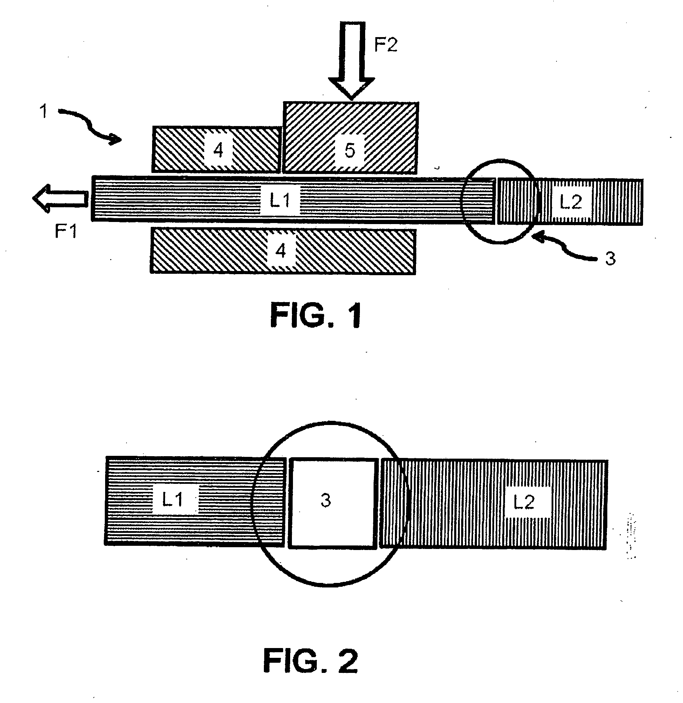

In Figur 1 ist eine schematisierte thermische Abtrennvorrichtung 1 im Längsschnitt zu sehen. Diese thermische Abtrennvorrichtung 1 weist einen ersten Leiterabschnitt L1 und einen zweiten Leiterabschnitt L2 auf. Der erste Leiterabschnitt L1 und der zweite Leiterabschnitt L2 sind mittels eines thermisch lösbaren Kontaktes 3 verbunden und befinden sich in elektrischem Kontakt zueinander.

Leiterabschnitt L1 befinde sich zumindest abschnittsweise in einem umgebenden Isolierkörper, hier dargestellt durch Abschnitte 4 und 5. Abschnitt 4 als auch Abschnitt 5 sind aus isolierendem Material hergestellt. Dabei kann das Material für Abschnitt 4 sich von dem verwendeten Material für Abschnitt 5 unterscheiden. Abschnitt 4 und Abschnitt5 umgeben in einem gewissen Abschnitt den Leiterabschnitt L1 und bilden einen umgebenden Isolierkörper.

Der erste Leiterabschnitt L1 ist mit einer Kraft F1 beaufschlagt, so dass, wenn die Kontaktstelle gelöst ist, der ersten Leiterabschnitt L1 in dem umgebenden Isolierkörper 4,5 verbracht wird.

Die Kontaktstelle 3 kann dabei durch unterschiedliche Mechanismen gelöst werden, z.B. thermisch oder durch mechanische Auftrennung.

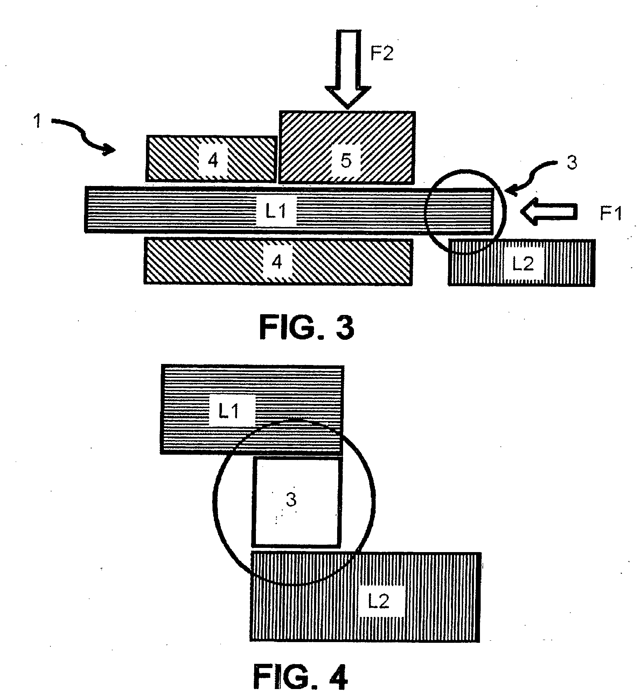

Weiterhin ist z.B. möglich wie in Figur 1 dargestellt eine Zugkraft F1 vorzusehen, die den ersten Leiterabschnitt L1 in den umgebenden Isolierkörper 4,5 hineinzieht, oder aber wie in Figur 3 dargestellt eine Schubkraft F1 vorzusehen, den ersten Leiterabschnitt L1 in den umgebenden Isolierkörper 4,5 hineinschiebt. Alternativ ist auch eine magnetische Kraft denkbar.

Die Vergrößerung des Abstandes beim Auslösen führt insbesondere bei Wechselstromanwendungen zu einem Abreisen eines eventuell entstehenden Lichtbogens zwischen den nun getrennten Leiterabschnitt L1 und Leiterabschnitt L2. Dies ist möglich, da bei Wechselstromanwendungen innerhalb einer Periode immer ein Nulldurchgang auftritt, so dass der Lichtbogen abreist.

Dieser Effekt wird durch das Verbringen in den umgebenden Isolierkörper 4,5 unterstützt.

Für Gleichstromanwendungen kann dies unter Umständen nicht ausreichend sein.

Um auch hier einen zuverlässigen Abschaltvorgang zu erreichen kann vorgesehen sein, dass der umgebenden Isolierkörper 4,5 einen bewegbaren Abschnitt 5 aufweist.

Der bewegbare Abschnitt 5 ist dergestalt, dass er, in einer ersten Position wie in Figur 1 und 3 dargestellt, wenn die Kontaktstelle 3 nicht gelöst ist, der Leiterabschnitt L1 bedeckt wird.

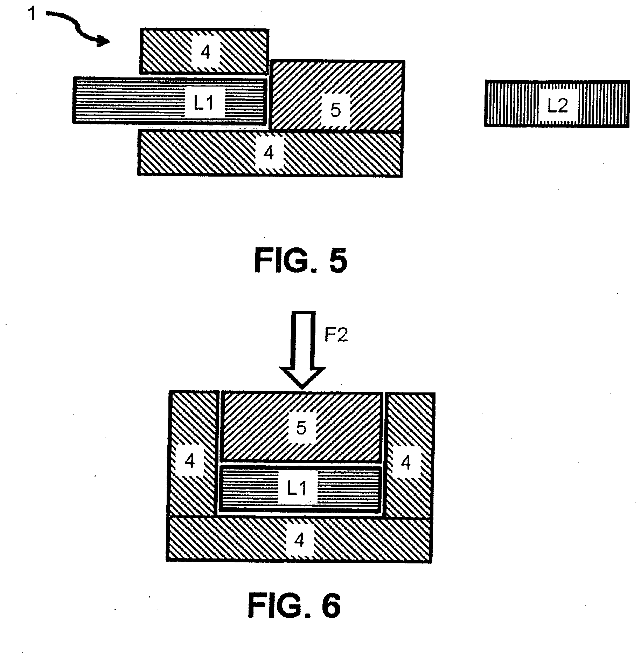

In einer zweiten Position - wie in Figur 5 dargestellt wenn die Kontaktstelle 3 gelöst ist und der Leiterabschnitt L1 hinter den bewegbaren Abschnitt 5 in den Isolierkörper 4 verbracht ist, füllt der bewegbare Abschnitt 5 den vom Leiterabschnitt L1 zuvor eingenommenen Raum.

Somit wird eine effektive Möglichkeit geschaffen, den Lichtbogen durchAusfüllen des vom Leiterabschnitt L1 zuvor eingenommen Raumes durch den bewegbaren Abschnitt 5 zum Verlöschen zu bringen.

Weiterhin kann der die thermische Abtrennvorrichtung auch so ausgeführt sein, dass der der bewegbare Abschnitt 5 mit einer Kraft beaufschlagt ist, so dass der bewegbare Abschnitt 5, wenn der Leiterabschnitt L1 in den Isolierkörper 4 verbracht ist, von der Kraft F2 aus der ersten Position in die zweite Position verbringbar ist.

Weiterhin ist es z.B. möglich, wie in Figur 1 und 3 dargestellt, eine Schubkraft F2 vorzusehen, die den bewegbaren Abschnitt 5 in den Isolierkörper 4 verbringt.

Die Kraft F2 kann beispielsweise mittels einer Feder aufgebracht werden. Alternativ ist auch eine abstoßende magnetische Kraft denkbar.

Alternativ kann natürlich auch vorgesehen sein, dass der Isolierkörper 4 mit dem Leiterabschnitt L1 relativ zum Abschnitt 5 bewegt wird.

Weiterhin ist es natürlich auch denkbar, die Verbringung des beweglichen Abschnitts allein durch Schwerkraft herbeizuführen. Es ist jedoch dann auf entsprechende Montage zu achten.

Alternativ oder zusätzlich kann in allen Ausführungsformen vorgesehen sein, dass der bewegbare Abschnitt 5 zumindest abschnittsweise aus einem ausgasenden Material besteht, um einen eventuell auftretenden Lichtbogen ausblasen zu können.

Alternativ oder zusätzlich kann in allen Ausfiihrungsformen vorgesehen sein, dass der umgebenden Isolierkörper 4 zumindest abschnittsweise aus einem ausgasenden Material besteht, um einen eventuell auftretenden Lichtbogen ausblasen zu können.

Bevorzugt ist vorgesehen, dass die lösbare Kontaktstelle 3 eine Lötstelle ist. Alternativ kann vorgesehen sein, dass die Kontaktstelle auch einen thermisch lösbaren Kleber aufweist. Weiterhin stellt die Kontaktstelle 3 eine elektrische Verbindung der Leiterabschnitt L1 und L2 im Betriebszustand zur Verfügung.

Um eine Auftrennung der lösbaren Kontaktstelle zu bewirken kann vorgesehen sein, dass diese entweder durch Eigenerwärmung oder aber durch Erwärmung seitens anderer Bauteile, z.B. eines Varistors oder dergleichen, selbst erwärmt wird. Alternativ kann natürlich auch vorgesehen sein um eine schnellere Schaltzeit zu gewährleisten eine Erwärmung z.B. mittels eines Heizelementes, vorzusehen.

Ohne auf einen bestimmten Leiterquerschnitt beschränkt zu sein, erweist sich ein im Wesentlichen reckeckiger Querschnitt als Verteilhaft, da hierdurch der frei werdende Raum am besten ausgefüllt werden kann. Dies ist für die Löschwirkung von besonderem Vorteil. Es versteht sich von selbst, dass damit auch einhergeht, dass der umgebenden Isolierkörper 4 als auch der bewegbare Abschnitt 5 entsprechend geformt sind.

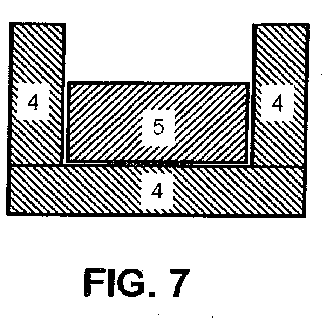

In Fig. 6 ist einen Querschnitt eine schematisiertes Detail einer erfindungsgemäßen thermischen Abtrennvorrichtung im Betriebsfall, und in Fig. 7 einen Querschnitt eine schematisiertes Detail einer erfindungsgemäßen thermischen Abtrennvorrichtung im ausgelösten Zustand gezeigt.

Klar zu erkenne ist der bevorzugt rechteckig ausgeführter Querschnitt des Leiterabschnittes L1. Diesem entsprechend ist der Isolierkörper 4 im Bereich des bewegbaren Abschnittes 5 als ein Kanal ausgeführt in dem der bewegbare Abschnitt deckelartig platziert ist.

Wird der Leiterabschnittes L1 in den Isolierkörper 4 verbracht so kann wie in Figur 7 dargestellt, der Kanal verschlossen werden.

Wie aus den Figuren 1 und 3 ersichtlich ist, kann die Kontaktstelle 3 geeignet angebracht sein.

In Figur 1 ist die Kontaktstelle 3 in der Weise angebracht, dass die Leiterabschnitte L1 und L2 stoßartig verbunden sind.

In Figur 3 ist die Kontaktstelle 3 in der Weise angebracht, dass die Leiterabschnitte L1 und L2 abschnittsweise überlappend verbunden sind.

Es versteht sich jedoch von selbst, dass die Form der Kontaktstelle 3 und ihre Anordnung bezüglich der Leiterabschnitte L1 und L2 auch andere Formen annehmen kann.

Im Betrieb kann die thermische Abtrennvorrichtung so 1 angeschlossen sein, dass der erste Leiterabschnitt (L1) im Betrieb am Neutralleiter oder an Masse oder am Schutzleiter - also an dem sogenannten kalten Ende - angeschlossen ist.

Soweit die Erfindung auf eine magnetische Kraft verweist kann diese magnetische Kraft sowohl permanent vorhanden sein, z.B. durch Einbringung magnetischer Bauteile oder aber temporärer Natur sein, z.B. durch Einbringung von elektromagnetischen Bauteilen.

Weiterhin versteht sich von selbst, dass bei magnetischen Kräften sowohl eine abstoßende als auch anziehende Kräfte vorgesehen sein können.

## Patentansprüche

1. Thermische Abtrennvorrichtung (1) mit einem ersten Leiterabschnitt (L1) und einem zweiten Leiterabschnitt (L2), wobei der erste Leiterabschnitt (L1) zumindest abschnittsweise in einem umgebenden Isolierkörper (4,5) geführt ist, wobei der erste Leiterabschnitt (L1) und zweite Leiterabschnitt (L2) an einer lösbaren Kontaktstelle (3) miteinander verbunden sind, wobei der erste Leiterabschnitt (L1) mit einer Kraft (F1) beaufschlagt ist, so dass, wenn die Kontaktstelle gelöst ist, der erste Leiterabschnitt (L1) in den umgebenden Isolierkörper (4, 5) verbracht wird,
wobei der umgebende Isolierkörper (4,5) einen bewegbaren Abschnitt (5) aufweist, wobei der bewegbare Abschnitt (5) dergestalt ist, dass in einer ersten Position, wenn die Kontaktstelle (3) nicht gelöst ist, der Leiterabschnitt (L1) abschnittsweise überdeckt wird, und in einer zweiten Position, wenn die Kontaktstelle (3) gelöst ist, der Leiterabschnitt (L1) hinter den bewegbaren Abschnitt (5) in den Isolierkörper (4) gezogen ist, so dass der bewegbare Abschnitt (5) den vom Leiterabschnitt (L1) zuvor eingenommenen Raum füllt.

2. Thermische Abtrennvorrichtung nach Anspruch 1, wobei der bewegbare Abschnitt (5) mit einer Kraft (F2) beaufschlagt ist, so dass der bewegbare Abschnitt (5) wenn der Leiterabschnitt (L1) in den Isolierkörper (4) gezogen ist, von der Kraft (F2) aus der ersten Position in die zweite Position verbringbar ist.

3. Thermische Abtrennvorrichtung nach Anspruch 1 oder 2, wobei der bewegbare Abschnitt (5) zumindest abschnittsweise aus einem ausgasenden Material besteht, um einen eventuell auftretenden Lichtbogen ausblasen zu können.

4. Thermische Abtrennvorrichtung nach einem der vorhergehenden Ansprüche, wobei der umgebenden Isolierkörper (4) zumindest abschnittsweise aus einem ausgasenden Material besteht, um einen eventuell auftretenden Lichtbogen ausblasen zu können.

5. Thermische Abtrennvorrichtung nach einem der vorhergehenden Ansprüche, wobei die Kontaktstelle eine Lötstelle aufweist.

6. Thermische Abtrennvorrichtung nach einem der vorhergehenden Ansprüche, wobei der erste Leiterabschnitt im Wesentlichen einen rechteckigen Durchmesser aufweist.

7. Thermische Abtrennvorrichtung nach einem der vorhergehenden Ansprüche, wobei der erste Leiterabschnitt (L1) mit einer Federkraft (F1) beaufschlagt ist, so dass, wenn die Kontaktstelle gelöst ist, der erste Leiterabschnitt in dem umgebenden Isolierkörper (4,5) hineingezogen wird.

8. Thermische Abtrennvorrichtung nach einem der vorhergehenden Ansprüche 2 bis 7, wobei der bewegbare Abschnitt (5) mit einer Federkraft (F2) beaufschlagt ist, so dass der bewegbare Abschnitt (5) wenn der Leiterabschnitt (L1) in den Isolierkörper (4) gezogen ist, von der Kraft (F2) aus der ersten Position in die zweite Position verbringbar ist.

9. Thermische Abtrennvorrichtung nach einem der vorhergehenden Ansprüche, wobei der erste Leiterabschnitt (L1) im Betrieb am Neutralleiter oder an Masse oder am Schutzleiter angeschlossen ist.

## Claims

1. A thermal disconnection device (1), comprising a first conductor portion (L1) and a second conductor portion (L2), wherein the first conductor portion (L1) is guided in a surrounding insulating body (4, 5) at least in portions, wherein the first conductor portion (L1) and the second conductor portion (L2) are connected to each other at a detachable contact point (3), wherein the first conductor portion (L1) is subjected to a force (FI) so that the first conductor portion is moved into the surrounding insulating body (4, 5) when the contact point is detached,
wherein the surrounding insulating body (4, 5) comprises a movable portion (5), wherein the movable portion (5) is configured so that, in a first position, when the contact point (3) is not detached, the conductor portion (L1) is covered at least in portions, and in a second position, when the contact point (3) is detached, the conductor portion (L1) is moved behind the movable portion (5) into the insulating body (4), so that the movable portion (5) fills the space that previously accommodated the conductor portion (L1).

2. The thermal disconnection device according to Claim 1, wherein the movable portion (5) is subjected to a force (F2) so that the movable portion (5) can be moved by the force (F2) from the first position into the second position when the conductor portion (L1) has been pulled into the insulating body (4).

3. The thermal disconnection device according to Claim 1 or 2, wherein the movable portion (5) consists, at least in portions, of an outgassing material so as to be able to blow out a potentially developing arc.

4. The thermal disconnection device according to one of the preceding claims, wherein the surrounding insulating body (4) consists, at least in portions, of an outgassing material so as to be able to blow out a potentially developing arc.

5. The thermal disconnection device according to one of the preceding claims, wherein the contact point comprises a soldering point.

6. The thermal disconnection device according to one of the preceding claims, wherein the first conductor portion has a substantially rectangular diameter.

7. The thermal disconnection device according to one of the preceding claims, wherein the first conductor portion (LI) is subjected to a spring force (FI) so that the first conductor portion is pulled into the surrounding insulating body (4, 5) when the contact point is detached.

8. The thermal disconnection device according to one of preceding Claims 2 to 7, wherein the movable portion (5) is subjected to a spring force (F2) so that the movable portion (5) can be moved by the force (F2) from the first position into the second position when the conductor portion (LI) has been pulled into the insulating body (4).

9. The thermal disconnection device according to one of the preceding claims, wherein the first conductor portion (L1) is connected to the neutral conductor or to earth or to the protective earth conductor during operation.

## Revendications

1. Dispositif de séparation thermique (1) avec une première partie conductrice (L1) et une deuxième partie conductrice (L2), dans lequel la première partie conductrice (L1) est guidée au moins par sections dans un corps isolant enveloppant (4, 5), dans lequel la première partie conductrice (L1) et la deuxième partie conductrice (L2) sont reliées ensemble en un point de contact apte à être défait (3), dans lequel la première partie conductrice (L1) est soumise à une force (F1), de sorte que lorsque le point decontact est défait, la première partie conductrice est transférée dans le corps isolant enveloppant (4, 5),
dans lequel le corps isolant enveloppant (4, 5) comporte une partie mobile (5), dans lequel la partie mobile (5) est conçue de telle manière que dans une première position, lorsque le point de contact (3) n'est pas défait, la partie conductrice (L1) est partiellement recouverte, et dans une deuxième position, lorsque le point de contact (3) est défait, la partie conductrice (L1) est tirée derrière la partie mobile (5) dans le corps isolant (4) de sorte que la partie mobile (5) remplit l'espace auparavant occupé par la partie conductrice (L1).

2. Dispositif de séparation thermique selon la revendication 1, dans lequel la section mobile (5) est soumise à une force (F2), de sorte que la section mobile (5) peut être transférée de la première position à la deuxième position grâce à la force (F2), lorsque la partie conductrice (L1) est tirée dans le corps isolant (4).

3. Dispositif de séparation thermique selon la revendication 1 ou 2, dans lequel la section mobile (5) est au moins partiellement constituée d'un matériau dégageant des gaz, pour pouvoir souffler un arc électrique susceptible d'apparaître.

4. Dispositif de séparation thermique selon l'une des revendications précédentes, dans lequel le corps isolant enveloppant (4) est au moins partiellement constitué d'un matériau dégageant des gaz, pour pouvoir souffler un arc électrique susceptible d'apparaître.

5. Dispositif de séparation thermique selon l'une des revendications précédentes, dans lequel le point de contact comporte un point de soudure.

6. Dispositif de séparation thermique selon l'une des revendications précédentes, dans lequel la première partie conductrice présente un diamètre essentiellement rectangulaire.

7. Dispositif de séparation thermique selon l'une des revendications précédentes, dans lequel la première partie conductrice (L1) est soumise à une force deressort (F1), de sorte que lorsque le point de contact est défait, la première partie conductrice est tirée à l'intérieur du corps isolant enveloppant (4, 5).

8. Dispositif de séparation thermique selon l'une des revendications précédentes 2 à 7, dans lequel la partie mobile (5) est soumise à une force de ressort (F2), de sorte que la partie mobile (5) peut être transférée par la force (F2) de la première position à la deuxième position lorsque la partie conductrice (L1) est tirée dans le corps isolant (4).

9. Dispositif de séparation thermique selon l'une des revendications précédentes, dans lequel, pendant le fonctionnement, la première partie conductrice (L1) est connectée au conducteur de neutre ou à la masse ou au conducteur de protection.
